# EUROPÄISCHE PATENTSCHRIFT

(11) **EP 0 697 686 B1**
(45) Veröffentlichungstag und Bekanntmachung des Hinweises auf die Patenterteilung: **04.12.2002**
(21) Anmeldenummer: 95109871.4
(22) Anmeldetag: 24.06.1995
(51) Int. Cl.: G08G 1/0968, G01C 21/00

(54) **Navigationsverfahren für Kraftfahrzeuge**
Navigation method for motor vehicles
Méthode de navigation pour véhicule à moteur

(30) Priorität: 18.08.1994 DE 4429322
(43) Veröffentlichungstag der Anmeldung: 21.02.1996
(73) Patentinhaber: Bayerische Motoren Werke Aktiengesellschaft, 80788 München (DE)
(72) Erfinder: Obert, Georg, D-80804 München (DE)

(56) Entgegenhaltungen:
- US-A- 5 237 323

## Beschreibung

Die Erfindung bezieht sich auf ein Navigationsverfahren nach dem Oberbegriff des Patentanspruchs 1.

Bei derartigen Verfahren, wie sie heute allgemein üblich sind, wird die Fahrtroute vor Beginn einer Fahrt durch Eingabe des Zielortes ausgewählt. Sofern es sich um ein modernes Navigationsverfahren handelt, wird der aktuelle Standort selbsttätig beispielsweise unter Verwendung der Satellitennavigation bestimmt. Andernfalls ist es in der Regel erforderlich, auch den jeweiligen Standort manuell einzugeben. Selbst wenn wie bei modernen Verfahren üblich, nur der Zielort eingegeben werden muss, so ist dies umständlich, da aus einer grossen Zahl möglicher Zielorte der in Frage kommende ausgewählt werden muss. Andererseits aber werden vielfach Fahrten unternommen, die hinsichtlich des Start- und Zielortes identisch sind.

Aus der US-A-5 237 323 ist ein Kartenanzeigesystem für ausgewählte markante Kartenpunkte sowie eine für das System vorgesehene Lernfunktion bekannt. Unter der Annahme, bei diesem Kartenpunkt handle es sich um den Endpunkt einer Fahrtroute, wird dabei die Karte angezeigt, die vorausgehend für einen bestimmten Kartenpunkt (Stadt, Straße, Denkmal, usw.) am häufigsten ausgewählt wurde.

Der Erfindung liegt die Aufgabe zugrunde, ein Navigationsverfahren der eingangs genannten Art zu schaffen, das den Fahrer zumindest dann von der Eingabe des Zielortes befreit, wenn er mehrmals dieselbe Fahrtroute zurücklegt.

Die Erfindung löst diese Aufgabe durch die Merkmale des Patentanspruchs 1.

Voraussetzung für die Erfindung ist die Aufzeichnung zurückgelegter Fahrtrouten. Auf der sich daraus ergebenden Wissensbasis werden dem Fahrer für den jeweiligen Standort diejenigen Fahrtrouten bereitgehalten, die er früher zurückgelegt hat. Sofern er eine Fahrtroute wiederholt, entfällt die nochmalige Eingabe des Zielortes.

Die Wirkungsweise des Navigationsverfahrens ist auf verschiedene Weise möglich. So können beispielsweise die frühere(n) Fahrtroute(n) angezeigt werden. Da aufgrund des aktuellen Standortes stets die möglichen Fahrtrouten von diesem Standort aus bereitgehalten werden, ist es damit auch möglich, während einer Fahrt, beispielsweise beim Stehen vor einer Ampel, die von dort aus vorliegenden früheren Fahrtrouten anzuzeigen und damit dem Fahrer die Möglichkeit zu eröffnen, seine gewünschte Fahrtroute auszuwählen.

Von besonderem Vorteil ist es dabei, die Reihenfolge der Fahrtrouten nach ihrer Häufigkeit zu wichten.

Der Fahrer kann manuell, beispielsweise mit Hilfe eines Cursors auf einem Display die gewünschte Fahrtroute auswählen. Eine weitere Verbesserung demgegenüber ergibt sich dann, wenn die aktuelle Fahrtroute durch Vergleich der gespeicherten Fahrtrouten mit den zu Beginn der aktuellen Fahrtroute zurückgelegten Fahrtstrecken selbsttätig ausgewählt wird. Sofern der Fahrer routinemäßig eine oder mehrere Strecken befährt, wird ihm durch die Erfindung sowohl die zeitraubende Eingabe des Zielortes sowie die Bestimmung der gewünschten Fahrtroute abgenommen.

Andererseits kann die Tatsache berücksichtigt werden, daß der Fahrer bei mehrmaligem Befahren derselben Strecke nicht notwendigerweise die Anzeige der Fahrtroute bzw. die Wiedergabe von Fahrtroutenempfehlungen benötigt. Es kann beispielsweise abhängig von der Häufigkeit, mit der die Fahrtroute bereits zurückgelegt wurde, die Anzeige der Fahrtroute erfolgen bzw. bei einer größeren Häufigkeit nicht mehr erfolgen.

Gerade in letzterem Fall kann es aber wünschenswert sein, die für die aktuelle Fahrtroute vorliegenden aktuellen Verkehrsinformationen wiederzugeben. Diese können beispielsweise über Verkehrsfunk aufgenommen werden und entsprechend dem Verlauf der aktuellen Fahrtroute eingesteuert werden.

Eine weitere Verbesserung der Erfindung ergibt sich dann, wenn zusätzliche Parameter für die jeweilige Fahrtroute aufgenommen und während der aktuellen Fahrt berücksichtigt werden. Zu diesen Parametern zählen die Uhrzeit, das Datum bzw. der zugehörige Wochentag, die Reisezeit sowie der Energieverbrauch zurückgelegter Fahrtrouten.

Die Fahrtroutenempfehlung kann dann aufgrund der aktuellen Parameter, d. h. des aktuellen Wochentags und der aktuellen Fahrzeit entsprechend den zu diesen Parametern vorliegenden Informationen über die voraussichtliche Fahrtzeit, den voraussichtlichen Kraftstoffverbrauch usw. erfolgen.

Schließlich können auch die Parameter der aktuellen Fahrt zur Aktualisierung der für diese Fahrtroute maßgeblichen Parameter, wie beispielsweise Fahrzeit und Energieverbrauch, herangezogen werden.

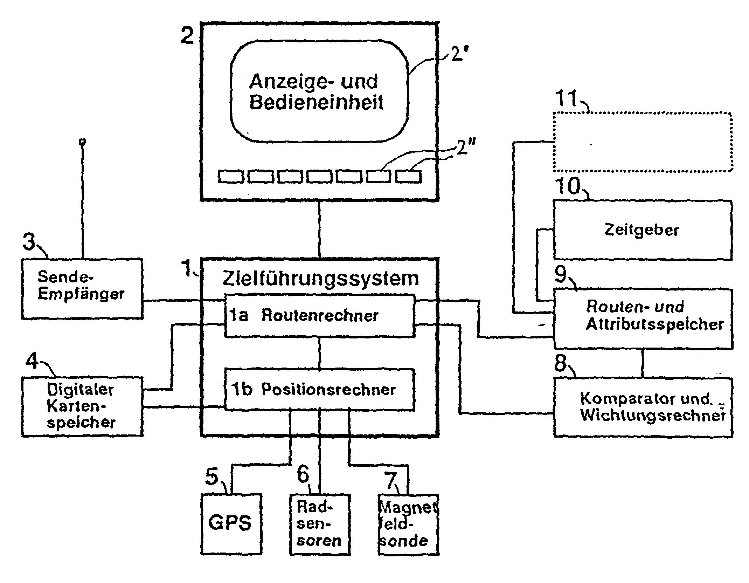

Das erfindungsgemäße Verfahren ist anhand der Zeichnung weiter erläutert. In dieser ist eine Navigationsvorrichtung gezeigt, mit der das erfindungsgemäße Verfahren durchgeführt werden kann.

Für die Durchführung des erfindungsgemäßen Navigationsverfahrens ist ein Zielführungssystem 1 mit einem Routenrechner 1a und einem Positionsrechner 1b vorgesehen, an das eine Anzeige- und Bedieneinheit 2 mit einem Bildschirm 2' mit einer Tastatur 2'' angeschlossen ist. Über einen Sender-Empfänger 3 werden digital codierte Verkehrsnachrichten (RDS-TMC) aufgenommen. Ein digitaler Kartenspeicher 4 enthält das Wegenetz. Eine Satellitennavigationseinheit 5, Radsensoren 6 zum Erkennen der zurückgelegten Wegstrecke sowie eine Magnetfeldsonde 7 zur Bestimmung der Orientierung des Kraftfahrzeugs liefern Daten an die Rechner 1a und 1b, um unter Zugrundeliegen des gespeicherten Wegenetzes (4) auf der Anzeige- und Bedieneinheit und unter Zugrundelegen des jeweiligen Zielorts die aktuelle Fahrtroute anzuzeigen bzw. Fahrtempfehlungen auszugeben. Insoweit entspricht die gezeigte Vorrichtung in Aufbau und Arbeitsweise einer handelsüblichen Vorrichtung.

Für das erfindungsgemäße Verfahren sind zusätzlich ein Komparator und Wichtungsrechner 8, ein Routen- und Attributsspeicher 9 sowie ein Zeitgeber 10 vorgesehen, von denen die Zeile 8 und 9 mit dem Zielführungssystem 1 verbunden sind. Der Zeitgeber 10 besitzt eine Uhrfunktion und liefert eine Information über die Tageszeit und das jeweilige Datum bzw. den jeweiligen Wochentag.

Mit Hilfe des Routen- und Attributsspeichers 9 wird jede Fahrtroute vom Fahrtanfang bis zum Fahrtziel aufgezeichnet. Ferner werden die Attribute der jeweiligen Fahrt in Form der Uhrzeit, dem Datum sowie die Reisezeit der Route bzw. ihrer z. B. gleichlangen Teilstrecken abgespeichert. Als weiteres Attribut kann noch der Energieverbrauch pro Teilstrecke abgespeichert werden, der beispielsweise von einem Bordcomputer 11 geliefert wird.

Nach Beendigung einer Fahrt wird die zurückgelegte Fahrtroute mit den bereits abgespeicherten Daten, die sich bereits im Speicher 9 befinden, verglichen und in geeigneter Weise abgelegt. Bei bereits vorhandener gleicher Route werden die Altdaten, unter besonderer Wertbildung der Attribute, überschrieben. Handelt es sich um eine neue Route, so wird diese separat abgelegt.

Nach einer gewissen Lernphase arbeitet das System folgendermaßen:

Nach Anschalten der Zündung vergleicht der Komparator 8 die Routen mit dem gleichen Startpunkt. Zweckmäßigerweise können die Startpunkte straßenbezogen sein bzw. in einem Umkreis von beispielsweise 100 m um den jeweiligen Startpunkt herum liegen. Damit wird dem Umstand Rechnung getragen, daß der Startpunkt häufig in einem gewissen Umkreis um den Wohnort oder Zielort des Fahrers herumliegt.

Alle von diesem Startpunkt ausgehenden Routen durchlaufen einen Wichtungsalgorithmus mit den Kriterien Uhrzeit, Datum, Anzahl, Streckenlänge usw. im Komparator und Wichtungsrechner 8. Die Routen werden nach ihrem Gewicht sortiert, wobei die wahrscheinlichste Route an erster Stelle steht. Die Routen können beispielsweise in dieser Reihenfolge dann auf dem Bildschirm 2' zur Anzeige gebracht werden.

Nach Zurücklegen einer oder mehrerer Teilstrecken wird durch Routenvergleich neu gewichtet, so daß nach n Teilstrecken eine hohe Zielwahrscheinlichkeit erreicht werden kann.

Nach m Teilstrecken übernimmt das Zielführungssystem 1 die wahrscheinlichste Zielroute und reagiert dann anhand der zusätzlich empfangenen verkehrsrelevanten Daten (von drei) auf bekannte Weise durch Ausgabe einer Fahrerinformation, Umleitungsempfehlung sowie ggf. einer Routenneuplanung. Da Reisezeiten und Reisekosten (über den Energieverbrauch) im Attributsspeicher 9 abgelegt sind, kann die Routenplanung gegenüber herkömmlichen Systemen verbessert werden. Der Fahrer hat die Möglichkeit, die Liste der wahrscheinlichsten Ziele (anhand von Straßennamen) auf dem Bildschirm 2' anzeigen zu lassen und durch Auswahl und Bestätigung seines Zielwunsches das System zu unterstützen.

Bei identischem Start und Ziel, aber unterschiedlichen Routen, werden die Verkehrsinformationen dann bezogen auf die Routen selektiert. Der Fahrer hat dann die Möglichkeit, anhand dieser Informationen die für ihn beste Route zu befahren.

Durch das erfindungsgemäße Verfahren wird der Fahrer bei bekannten Routen von der Zieleingabeprozedur befreit. Es ist nicht mehr erforderlich, die Fahrtroute anzuzeigen. Es wird nur dann eine Meldung ausgegeben, wenn auf der Strecke zum wahrscheinlichen Ziel signifikante Informationen für den Fahrer von Bedeutung sind.

Es ist selbstverständlich auch möglich, die gespeicherten Ziele von jedem Standort aus auf dem Bildschirm 2' anzuzeigen und über die Tastatur 2'' den tatsächlichen Zielwunsch einzugeben.

Der Bedienkomfort des Zielführungssystems wird erheblich. verbessert und die Ablenkung des Fahrers verringert. Bei mehreren gelernten Fahrtstrecken zu einem Ziel kann das System anhand der historischen Daten eine Routenempfehlung nach den Kriterien kürzeste oder ökonomischste Fahrtroute in Abhängigkeit des Wochentages oder der Tageszeit empfehlen. Ein niedrigerer Treibstoffverbrauch wird dadurch gefördert.

## Patentansprüche

1. Navigationsverfahren für Kraftfahrzeuge mit einem Wegenetzspeicher (4) und einem Rechner (1) zur Ausgabe von Fahrtroutenempfehlungen aufgrund einer ausgewählten Fahrtroute, **dadurch gekennzeichnet, dass** die vom aktuellen Standort aus durchgeführten früheren Fahrtrouten entsprechend ihrer Häufigkeit gewichtet und für die Bestimmung der aktuellen Fahrtroute selbsttätig derart angezeigt werden, dass die am häufigsten durchgeführte und daher wahrscheinlichste Zielroute an erster Stelle steht.

2. Navigationsverfahren nach Anspruch 1, **dadurch gekennzeichnet, dass** die aktuelle Fahrtroute durch Vergleich der gespeicherten Fahrtrouten mit den zu Beginn der aktuellen Fahrtroute zurückgelegten Teilstrecken selbsttätig ausgewählt wird.

3. Navigationsverfahren nach Anspruch 2, **dadurch gekennzeichnet, dass** die aktuelle Fahrtroute angezeigt wird.

4. Navigationsverfahren nach Anspruch 2, **dadurch gekennzeichnet, dass** nur die für die aktuelle Fahrtroute maßgeblichen Verkehrsinformationen ausgegeben werden.

5. Navigationsverfahren nach einem der Ansprüche 1 bis 4, **dadurch gekennzeichnet, dass** zusätzlich weitere Parameter über den Verlauf der früheren Fahrtrouten für die Gewichtung berücksichtigt werden und dass die Fahrtroutenempfehlung unter Berücksichtigung der weiteren Parameter vorgenommen wird.

## Claims

1. A navigation method for motor vehicles with a road network store and a computer for the output of travel route recommendations based on a selected travel route, **characterised in that** the travel routes earlier traversed from the current position are weighted corresponding to their frequency and for the determination of the actual travel route are automatically displayed such that the most frequently travelled and therefore the most probable route to the destination is at the head of the list.

2. A navigation method according to Claim 1, **characterised in that** the current travel route is automatically selected by comparison of the stored travel routes with the part distances already travelled at the start of the current travel route.

3. A navigation method according to Claim 2, **characterised in that** the current travel route is displayed.

4. A navigation method according to Claim 2, **characterised in that** only the traffic information important to the current travel route is output.

5. A navigation method according to one of the Claims 1 to 4, **characterised in that** additionally further parameters relating to the earlier traversing of travel routes are considered in the weighting and that the travel route recommendation is made under the consideration of the further parameters.

## Revendications

1. Procédé de navigation pour des véhicules automobiles comportant une mémoire de réseau routier et un calculateur pour émettre des recommandations de trajets à partir d'un trajet sélectionné,
**caractérisé en ce que**
les trajets parcourus antérieurement à partir de l'emplacement actuel sont pondérés en fréquence et sont affichés automatiquement pour déterminer le trajet actuel de façon que le trajet de destination le plus fréquemment parcouru et ainsi le plus probable se trouve en première position.

2. Procédé de navigation selon la revendication 1,
**caractérisé en ce que**
le trajet actuel est sélectionné automatiquement par comparaison des trajets en mémoire avec les parties de trajets parcourues au début du trajet actuel.

3. Procédé de navigation selon la revendication 2,
**caractérisé en ce qu'**
on affiche le trajet actuel.

4. Procédé de navigation selon la revendication 2,
**caractérisé en ce qu'**
on émet les informations de circulation caractéristiques du trajet actuel.

5. Procédé de navigation selon l'une quelconque des revendications 1 à 4,
**caractérisé en ce que**
d'autres paramètres supplémentaires concernant le profil des trajets antérieurs sont pris en compte pour la pondération et on effectue la recommandation de trajet en tenant compte des autres paramètres.
